# EUROPEAN PATENT APPLICATION

(11) **EP 3 132 914 A1**
(43) Date of publication of application: **22.02.2017**
(21) Application number: 16183291.0
(22) Date of filing: 09.08.2016
(51) Int. Cl.: B29C 65/02, B29C 65/08, B29C 65/04, B29C 65/16, B29C 65/06, B29C 65/82

(54) **JOINED BODY, METHOD OF MANUFACTURING JOINED BODY, AND STRUCTURE FOR VEHICLE**

(30) Priority: 18.08.2015 JP 2015160974
(71) Applicant: Toyota Jidosha Kabushiki Kaisha, Toyota-shi, Aichi-ken, 471-8571 (JP)
(72) Inventor: IWANO, Yoshihiro, TOYOTA-SHI, AICHI-KEN, 471-8571 (JP)
(74) Representative: Intès, Didier Gérard André

(57) **Abstract**

A joined body includes: a first compact (1) that includes a fiber-reinforced resin (2) and a fiber exposure portion where a fiber (3) of the fiber-reinforced resin is exposed, the fiber exposure portion being formed on at least a part of a surface of the first compact (1); a second compact that is joined to the first compact (1) through a joint portion that is interposed between the fiber exposure portion of the first compact (1) and the second compact.

## Description

### BACKGROUND

### 1. Technical Field

The present disclosure relates to a joined body, a method of manufacturing a joined body, and a structure for a vehicle.

### 2. Description of Related Art

Regarding a vehicle body for a next-generation vehicle, it is expected that the use of resin components will increase. Therefore, the establishment of a method of joining resin components to each other is urgent.

For example, Japanese Patent Application Publication No. 2014-076565 (JP 2014-076565 A) discloses a method of joining fiber-reinforced thermoplastic resins to each other through a thermoplastic resin sheet that is interposed between the fiber-reinforced thermoplastic resins.

Further, in general, joining between resin components or between a resin component and a metal component is fixed using an adhesive or using a fastening member such as a rivet.

For example, Japanese Patent Application Publication No. 2008-230238 (JP 2008-230238 A) discloses a fiber-reinforced composite plate including a thermosetting resin and a thermoplastic resin.

Further, Japanese Patent Application Publication No. 2013-028159 (JP 2013-028159 A) discloses a method of manufacturing a composite compact, the method including: forming a resin body-integrated preform by preliminarily joining a resin body, which is formed of a resin B, to a part of a surface of a fiber-reinforced resin A; and arranging the resin body-integrated preform in a mold to perform insert molding thereon using the same resin as the resin B.

However, in the technique disclosed in JP 2014-076565 A, fiber-reinforced thermoplastic resins are joined to each other through a thermoplastic resin sheet that is interposed between the fiber-reinforced thermoplastic resins. Therefore, in a case where a thermoplastic resin is joined to another material such as a thermosetting resin or a metal material using the technique disclosed in JP 2014-076565 A, vibration welding is difficult to perform, and it may be necessary to devise a joining method. The techniques disclosed in JP 2008-230238 A and JP 2013-028159 A are not suitable for the joining of a resin component. Furthermore, when an adhesive or a fastening member such as a rivet is used to join a resin component to another resin component or a metal component, the mass or cost may increase. In particular, in a case where a resin component is joined to another resin component or a metal component using an adhesive, the strength of a joint portion is determined by the strength of the adhesive rather than the strength of the resin. Therefore, depending on the adhesive, the material strength of the resin component may not be fully utilized.

### SUMMARY OF THE DISCLOSURE

The disclosure provides a joined body which exhibits a satisfactory joining strength with a simple configuration, a method of manufacturing the joined body, and a structure for a vehicle including the joined body.

According to a first aspect of the disclosure, there is provided a joined body including: a first compact that includes a fiber-reinforced resin and a fiber exposure portion where a fiber of the fiber-reinforced resin is exposed, the fiber exposure portion being formed on at least a part of a surface of the first compact; a second compact that is joined to the first compact through a joint portion that is interposed between the fiber exposure portion of the first compact and the second compact.

In the above-described aspect, at least one of the first compact and the second compact may include a thermoplastic resin.

According to a second aspect of the disclosure, there is provided a method of manufacturing a joined body, the method including: a step of preparing a first compact and a second compact, the first compact including a fiber-reinforced resin and a fiber exposure portion where a fiber of the fiber-reinforced resin is exposed, and the fiber exposure portion being formed on at least a part of a surface of the first compact; and a step of joining the first compact and the second compact to each other at the fiber exposure portion of the first compact.

According to a third aspect of the disclosure, there is provided a structure for a vehicle including the joined body according to the above-described aspect.

According to the disclosure, a joined body which exhibits a satisfactory joining strength with a simple configuration, a method of manufacturing the joined body, and a structure for a vehicle including the joined body can be provided.

### BRIEF DESCRIPTION OF THE DRAWINGS

Features, advantages, and technical and industrial significance of exemplary embodiments of the disclosure will be described below with reference to the accompanying drawings, in which identical numerals denote common elements, and wherein:
FIG. 1 is a schematic sectional view showing a compact before a fiber exposure portion is provided thereon;
FIG. 2 is a schematic sectional view showing a fiber exposure portion of a compact on which the fiber exposure portion is provided through a corona discharge treatment;
FIG. 3 is a schematic sectional view showing a fiber exposure portion of a compact on which the fiber exposure portion is provided through a flame treatment;
FIG. 4 is a schematic sectional view showing a fiber exposure portion of a compact on which the fiber exposure portion is provided through a sanding treatment;
FIG. 5 is an image showing a surface of a compact after removal of a mold release agent;
FIG. 6 is an image showing a fiber exposure portion of a compact which was formed through a sanding treatment;
FIG. 7 is an image showing a fiber exposure portion of a compact which was formed through a flame treatment;
FIG. 8 is an image showing a fiber exposure portion of a compact which was formed through a corona discharge treatment; and
FIG. 9 is an image showing a section of a joint portion formed by joining a first compact including C-SMC, on which a corona discharge treatment was performed, and a second compact including a continuous fiber material to each other by ultrasonic welding.

### DETAILED DESCRIPTION OF EMBODIMENTS

Hereinafter, an embodiment of a joined body, a method of manufacturing a joined body, and a structure for a vehicle according to the disclosure will be described in detail.

### <Compact>

A compact, as used herein, is a member, part, piece, component, etc. of a larger object, which is referred to as a "joined body". A compact according to the embodiment includes a fiber-reinforced resin and a fiber exposure portion where a fiber of the fiber-reinforced resin is exposed, the fiber exposure portion being formed on at least a part of a surface of the compact. By using the compact according to the embodiment, in a case where a joined body is obtained by joining the compact according to the embodiment to another compact, the joining strength of the joined body can be improved. The reason for this is not clear but is presumed to be as follows. In the compact according to the embodiment, the fiber exposure portion where the fiber of the fiber-reinforced resin is exposed is provided on at least a part of a surface thereof. Therefore, it is presumed that, in a case where the compact according to the embodiment (hereinafter, also referred to as "first compact") is joined to another compact (hereinafter, also referred to as "second compact) at the fiber exposure portion, the fiber exposed through the fiber exposure portion is likely to be entangled with a surface of the second compact. As a result, it is presumed that, by the first compact and the second compact being joined to each other at the fiber exposure portion, the joining strength of the joined body can be improved.

The fiber-reinforced resin included in the compact according to the embodiment is not particularly limited, and for example, a commercially available fiber-reinforced resin including a resin and a fiber can be selected according to the purpose of the embodiment. In the embodiment, the resin included in the fiber-reinforced resin may be a thermoplastic resin or a thermosetting resin. In a case where the resin included in the fiber-reinforced resin is a thermosetting resin, the thermosetting resin may be cured or may be in a non-cured or semi-cured state.

In a case where the resin included in the fiber-reinforced resin is a thermoplastic resin, the thermoplastic resin is not particularly limited, and various well-known thermoplastic resins can be used according to the purpose. Examples of the thermoplastic resin used in the embodiment include a polycarbonate resin, a polyamide (PA) resin, a polyurethane (PU) resin, a polyvinyl chloride resin, an acrylonitrile-butadiene-styrene copolymer (ABS) resin, and a polypropylene (PP) resin. Among these, a PA resin or a PP resin have been identified as providing interesting results.

In a case where the resin included in the fiber-reinforced resin is a thermosetting resin, the thermosetting resin is not particularly limited, and various well-known thermosetting resins can be used according to the purpose. Examples of the thermosetting resin used in the embodiment include a vinyl ester resin, an unsaturated polyester resin, a phenol resin, an epoxy resin, and a urethane resin. Among these, an epoxy resin has been identified as providing interesting results.

The resin included in the fiber-reinforced resin can be a thermoplastic resin. That is, the fiber-reinforced resin used in the embodiment can be a fiber-reinforced thermoplastic resin. By using a fiber-reinforced thermoplastic resin as the fiber-reinforced resin, the thermoplastic resin included in the fiber-reinforced thermoplastic resin is likely to be strongly attached to a surface of the second compact after being melted. Therefore, the joining strength of a joined body which is formed using the compact according to the embodiment can be further improved.

The kind of the fiber included in the fiber-reinforced resin is not limited, and various well-known fibers can be used according to the purpose. Examples of the kind of the fiber included in the fiber-reinforced resin include: a resin fiber such as aramid fiber, cellulose fiber, nylon fiber, vinylon fiber, polyester fiber, polyolefin fiber, or rayon fiber; carbon fiber; glass fiber; and metal fiber. Among these, carbon fiber which can realize high mechanical strength has been identified as providing interesting results.

The form of the fiber used in the embodiment is not limited, and various well-known fibers can be used according to the purpose. The form of the fiber used in the embodiment is, for example, woven fabric or non-woven fabric. In particular, in a case where carbon fiber is used as the fiber, the form of the carbon fiber is, for example, spun yarn, woven fabric, knit, braid, felt, mat, paper, chopped strand, filament, or milled fiber.

In the embodiment, the content of the fiber in the fiber-reinforced resin is preferably 5 mass% to 50 mass% and more preferably 10 mass% to 50 mass%.

A method of obtaining the compact according to the embodiment is not particularly limited, and various well-known methods can be used according to the purpose. Examples of a method, which can be used in a case where a thermoplastic resin is used as the resin included in the fiber-reinforced resin, include: a method of impregnating a fiber with a solution or melt of a thermoplastic resin and, optionally, drying and forming the fiber into a sheet shape; a method of alternately laminating a fiber and a thermoplastic resin film and applying heat and pressure to the laminate for forming; and a method of laminating a fiber-reinforced thermoplastic resin film and applying heat and pressure to the laminate for forming. Examples of a method, which can be used in a case where a thermosetting resin is used as the resin included in the fiber-reinforced resin, include a method of preparing a non-cured compact in the same manner as that in a case where a thermoplastic resin is used as the resin and, optionally, applying heat and pressure to the compact to obtain a cured or semi-cured compact. Conditions under which heat and pressure is applied to the compact using the thermosetting resin can be appropriately set according to the kinds, amounts, and the like of the thermosetting resin and an optionally used resin curing agent.

The compact according to the embodiment includes the fiber exposure portion where the fiber of the fiber-reinforced resin is exposed, the fiber exposure portion being provided on at least a part of a surface of the compact. A position where the fiber exposure portion is provided is not particularly limited. Since the compact according to the embodiment (the first compact) and the second compact are joined to each other at the fiber exposure portion, the position where the fiber exposure portion is provided can be set in consideration of, for example, the shapes of the compacts and a junction position between the compact according to the embodiment and the second compact.

A method of providing the fiber exposure portion on the compact according to the embodiment is not particularly limited. The fiber exposure portion is not particularly limited as long as it is in a state where the fiber is exposed to the surface of the compact by removing the resin from the surface. Therefore, examples of the method of providing the fiber exposure portion on the surface of the compact include a method of removing the resin from the surface of the compact at a position where the fiber exposure portion will be provided.

A treatment for removing the resin from the surface of the compact is not particularly limited. Examples of the treatment for removing the resin from the surface of the compact in the embodiment include a corona discharge treatment, a flame treatment, and a sanding treatment.

The corona discharge treatment used in the embodiment can be performed, for example, using a commercially available discharge surface treatment device. An electrode voltage in the corona discharge treatment, a treatment time, a distance between a treatment head and an object (compact) in the corona discharge treatment device, and the like are appropriately selected in consideration of the kinds, amounts, and the like of the resin, the fiber, and the like included in the compact. For example, the electrode voltage in the corona discharge treatment device is preferably 1 kV to 50 kV and more preferably 5 kV to 20 kV. Although depending on the electrode voltage value, the treatment time is preferably 1 second to 10 minutes and more preferably 10 seconds to 5 minutes. Although depending on the electrode voltage value, the distance between the treatment head and the object is preferably 1 mm to 20 mm and more preferably 2 mm to 10 mm. In a case where the fiber exposure portion is formed through a corona discharge treatment, carbon fiber can be used as the fiber. By performing the corona discharge treatment on the compact including carbon fiber, a current flows through the carbon fiber, the carbon fiber is heated, and thus the resin around the carbon fiber is efficiently removed. From the same viewpoint as in the description of the carbon fiber, glass fiber may also be used as the fiber.

The flame treatment used in the embodiment can be performed, for example, using a commercially available burner. A calorific value of the burner, a flame temperature, a treatment time, and the like in the flame treatment is appropriately selected in consideration of the kinds, amounts, and the like of the resin, the fiber, and the like included in the compact. For example, the calorific value of the burner is preferably 0.1 kW to 10 kW and more preferably 0.5 kW to 5 kW. Although depending on the calorific value of the burner and the like, the flame temperature is preferably 1000°C to 2000°C and more preferably 1000°C to 1500°C. Although depending on the calorific value of the burner and the like, the treatment time is preferably 1 second to 1 minute and more preferably 2 seconds to 30 seconds.

The sanding treatment used in the embodiment can be performed, for example, using abrasive paper. Examples of the abrasive paper include abrasive paper having a grain size corresponding to P60 according to JIS R6252:2006. However, the abrasive paper is not limited to the abrasive paper having a grain size corresponding to P60. A polishing time, a pressure at which the abrasive paper is brought into contact with an object (compact), and the like are appropriately selected in consideration of the kinds, amounts, and the like of the resin, the fiber, and the like included in the compact.

Hereinafter, the fiber exposure portion according to the embodiment will be described using the drawings. In each drawing, the same components are represented by the same reference numerals, and the description thereof will not be repeated. In each drawing, the sizes of components are conceptual, and relative relationships between the sizes of the components are not limited thereto.

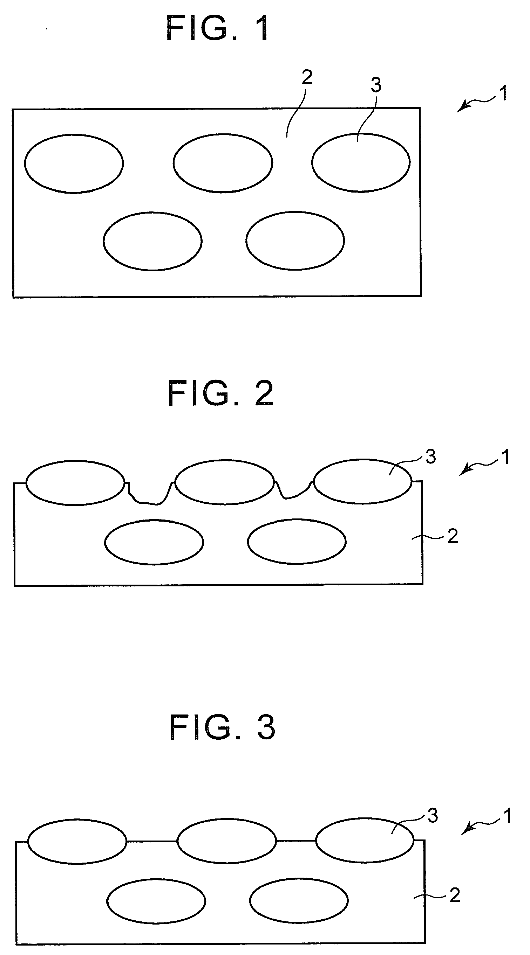

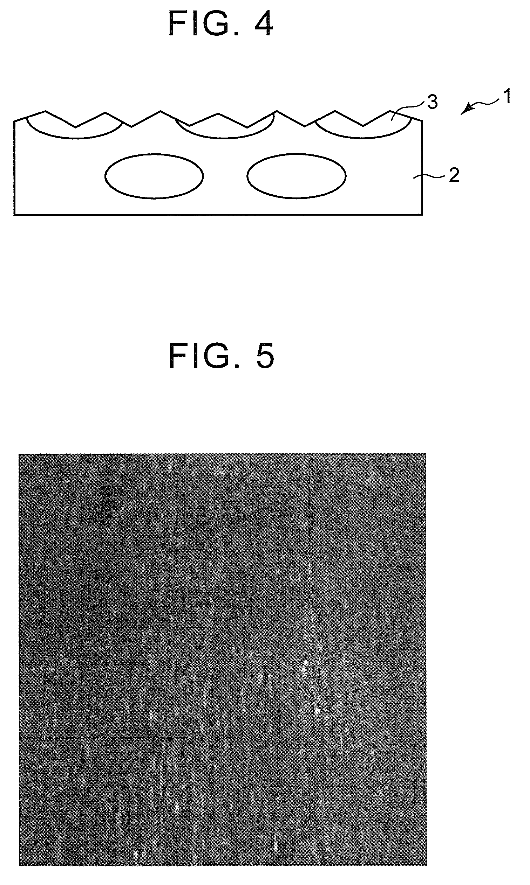

FIG. 1 is a schematic sectional view showing a compact before a fiber exposure portion is provided thereon. In FIG. 1, a compact 1 includes a resin 2 and a fiber 3. FIG. 2 is a schematic sectional view showing a fiber exposure portion of a compact on which the fiber exposure portion is provided through a corona discharge treatment. As shown in FIG. 2, porous concavo-convex portions are present on a surface of the compact 1, and the fiber 3 is exposed to the surface of the compact 1. FIG. 3 is a schematic sectional view showing a fiber exposure portion of a compact on which the fiber exposure portion is provided through a flame treatment. As shown in FIG. 3, a resin layer on the surface of the compact 1 disappears, and the fiber 3 is exposed to the surface of the compact 1. FIG. 4 is a schematic sectional view showing a fiber exposure portion of a compact on which the fiber exposure portion is provided through a sanding treatment. As shown in FIG. 4, the surface of the compact 1 and a part of the fiber 3 are scraped off, and the fiber 3 is exposed to the surface of the compact 1. The state of the fiber exposure portion tends to vary depending on the method of providing the fiber exposure portion on the compact.

### <Joined Body and Method of Manufacturing the Same>

The joined body according to the embodiment includes: a first compact that includes a fiber-reinforced resin and a fiber exposure portion where a fiber of the fiber-reinforced resin is exposed, the fiber exposure portion being formed on at least a part of a surface of the first compact; a second compact; and a joint portion that is interposed between the fiber exposure portion of the first compact and the second compact. In the joined body according to the embodiment, the first compact and the second compact are joined to each other through a joint portion at the fiber exposure portion of the first compact. In a case where the first compact and the second compact are joined to each other at the fiber exposure portion, the fiber exposed through the fiber exposure portion is likely to be entangled with the surface of the second compact. Therefore, it is presumed that the joined body according to the embodiment exhibits an excellent joining strength.

As the first compact used in the joined body according to the embodiment, the joined body according to the above-described embodiment is used. The second compact used in the joined body according to the embodiment is not particularly limited. Examples of the second compact include a compact including a thermoplastic resin, a compact including a thermosetting resin, and a metal compact. The compact including a thermoplastic resin or the compact including a thermosetting resin may include a fiber. Specific examples of the fiber which may be included in the second compact include the fibers which are exemplified in the description of the compact according to the embodiment. The resin which is included in the compact including a thermoplastic resin or the compact including a thermosetting resin may be a thermoplastic resin or a thermosetting resin. In a case where a thermosetting resin is used, the thermosetting resin may be cured or may be in a non-cured or semi-cured state.

In the embodiment, as a combination of the first compact and the second compact, at least either the first compact or the second compact can include a thermoplastic resin. By at least either the first compact or the second compact including a thermoplastic resin, in a case where the first compact and the second compact are joined to each other, the thermoplastic resin is likely to be strongly attached to a surface of the other compact after being melted. Therefore, the joining strength between the first compact and the second compact in the joined body can be improved.

In the embodiment, regarding a combination of the first compact and the second compact, specifically, in a case where the first compact includes a thermoplastic resin, the second compact is, for example, a compact including a thermoplastic resin, a compact including a thermosetting resin, or a metal compact. On the other hand, in a case where the first compact includes a thermosetting resin, the second compact is, for example, a compact including a thermoplastic resin.

In a case where the second compact includes a thermoplastic resin and does not include a fiber, for example, injection molding, extrusion molding, blow molding, or powder molding may be used as a molding method for the second compact. In a case where the second compact includes a fiber-reinforced thermoplastic resin, the second compact can be manufactured using the same method as that of the first compact. As the second compact, the compact according to the embodiment can also be used. That is, the second compact also could include a fiber-reinforced resin having a fiber exposure portion at one surface of the second compact.

In a case where the second compact is a metal compact, metal included in the second compact is, for example, iron, titanium, aluminum, or copper but is not limited thereto. In a case where the second compact is a metal compact, at least a portion of the metal compact which is joined to the first compact may be roughened such that the thermoplastic resin included in the first compact can be strongly welded to the metal compact. Examples of the roughening treatment include a blasting method of blowing particles through a dry process, a honing method of blowing particles through a wet process, an abrasive grinding method, a mechanical roughening treatment such as a roughening method using sandpaper, an electrochemical roughening treatment of performing electrolysis in an electrolytic solution, and a chemical roughening treatment of immersing a material in a chemical solution.

The joined body according to the embodiment can be manufactured, for example, using a method of manufacturing a joined body according to the embodiment, the method including: a step of preparing a first compact and a second compact, the first compact including a fiber-reinforced resin and a fiber exposure portion where a fiber of the fiber-reinforced resin is exposed, and the fiber exposure portion being formed on at least a part of a surface of the first compact; and a step of joining the first compact and the second compact to each other at the fiber exposure portion of the first compact. Using the method of manufacturing a joined body according to the embodiment, the first compact and the second compact can be joined to each other at the fiber exposure portion of the first compact. The fiber is exposed through the fiber exposure portion, and thus by joining the first compact and the second compact to each other at the fiber exposure portion, the fiber exposed through the fiber exposure portion is likely to be entangled with the surface of the second compact. Therefore, the joining strength of the joined body can be improved.

In the method of manufacturing a joined body according to the embodiment, the first compact and the second compact are prepared in the step of preparing the first compact and the second compact. A method of preparing the first compact and the second compact is not particularly limited. The first compact and the second compact may be manufactured by a person who performs himself the step of joining the first compact and the second compact to each other as described below, or may be available through, for example, purchasing. A material, a method, and the like used to prepare the first compact and the second compact are as described above.

In the method of manufacturing a joined body according to the embodiment, the first compact and the second compact are joined to each other at the fiber exposure portion of the first compact in the step of joining the first compact and the second compact to each other. A method of joining the first compact and the second compact to each other is not particularly limited, and a well-known welding method can be used. Examples of the welding method which can be used in the embodiment include ultrasonic welding, vibration welding, induction welding, high-frequency welding, laser welding, thermal welding, and spin welding. Among these, ultrasonic welding or vibration welding is preferable.

By using vibration welding as the welding method, the strength of the joined body can be further improved. On the other hand, by using ultrasonic welding as the welding method, the degree of freedom for the design and structure of the compacts to be joined can be improved.

In the vibration welding, in a state where a load is applied to the first compact and the second compact to be joined using a pressing machine or the like, either the first compact or the second compact is horizontally vibrated with respect to a contact surface between the first compact and the second compact, and the first compact and the second compact are welded to each other using frictional heat generated by the horizontal vibration.

In the ultrasonic welding, electrical energy is converted into vibration energy using an ultrasonic oscillator, this vibration energy is applied to a contact surface between the first compact and the second compact, and the first compact and the second compact are welded to each other using frictional heat generated from the contact surface.

In a case where vibration welding is used as the welding method, various conditions for the vibration welding can be selected according to the shapes of the first compact and the second compact, the melting temperature of the resin, the area of the joint interface, and the like. For example, the vibration frequency is preferably 100 Hz to 300 Hz and more preferably 210 Hz to 260 Hz. The load applied to the first compact and the second compact is preferably 0.1 MPa to 5 MPa, more preferably 0.1 MPa to 2 MPa, and still more preferably 0.1 MPa to 1 MPa. The vibration amplitude is preferably 0.5 mm to 5 mm, more preferably 1 mm to 3 mm, and still more preferably 1.5 mm to 2.5 mm.

In a case where ultrasonic welding is used as the welding method, various conditions for the ultrasonic welding can be selected according to the shapes of the first compact and the second compact, the melting temperature of the resin, the area of the joint interface, and the like. For example, a pressure applied to a horn included in an ultrasonic generator, which generates ultrasonic waves, is preferably 100 N to 2000 N, more preferably 300 N to 1000 N, and still more preferably 500 N to 800 N. The ultrasonic vibration amplitude is preferably 10 µm to 100 µm and more preferably 15 µm to 50 µm. The pressure applied to the first compact and the second compact is preferably 0 kN to 5 kN, more preferably 0 kN to 3kN, and still more preferably 0 kN to 1 kN.

### <Structure for Vehicle>

A structure for a vehicle according to the embodiment includes the joined body according to the above-described embodiment. The kind of the structure for a vehicle according to the embodiment is not particularly limited, and examples thereof include a side door, a hood, a roof, a back door, a luggage door, a bumper, and a crash box. In the structure for a vehicle according to the embodiment, the first compact and the second compact are joined to each other at the fiber exposure portion of the first compact. In a case where the first compact and the second compact are joined to each other at the fiber exposure portion, the fiber exposed through the fiber exposure portion is likely to be entangled with the surface of the second compact. Therefore, the joining strength of the joined body is improved, and a structure for a vehicle which includes the joined body having a satisfactory joining strength can be obtained.

Hereinafter, the embodiment will be described in more detail using Examples and Comparative Examples but is not limited to the following Examples.

### (Preparation of Test Piece)

As resin materials, the following materials were used.
- Fiber-reinforced thermoplastic resin manufactured by Mitsubishi Rayon Co., Ltd. (CFTRP, continuous fiber material)
- Fiber-reinforced thermoplastic resin manufactured by Toray Industries Inc. (CFTRP, random material)
- Carbon-sheet molding compound manufactured by Mitsubishi Rayon Co., Ltd. (C-SMC, thermosetting resin material)

In this example, a compact including C-SMC was used as the first compact, and a compact including the continuous fiber material or the random material was used as the second compact. Regarding the size of the test piece, the length was 175 mm, the width was 25 mm, and the thickness was 3 mm.

The following treatment was performed on one end of the compact including C-SMC.

In a mold release agent removal treatment, a mold release agent on the end of the compact including C-SMC was removed using a cleaner. This test piece in this stage was used as a Comparative Example. In the mold release agent removal treatment, a fiber exposure portion was not formed. FIG. 5 is an image showing a surface of the compact after the mold release agent removal treatment.

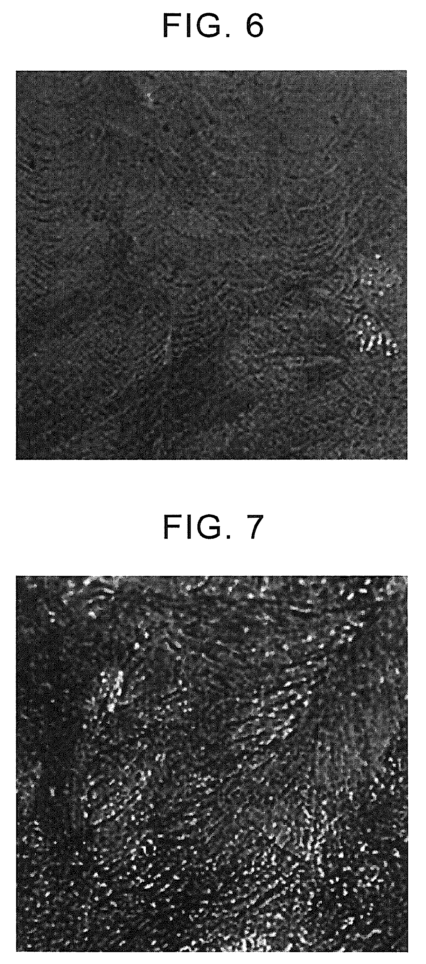

In a sanding treatment, one end of the compact including C-SMC was treated with an orbital sander at an air pressure of about 0.6 MPa after mounting abrasive paper having a grain size corresponding to P60 according to JIS R6252:2006 on the orbital sander. As a result, a fiber exposure portion was formed. FIG. 6 is an image showing the fiber exposure portion of the compact which was formed through the sanding treatment.

In a flame treatment, one end of the compact including C-SMC was heated using a burner under conditions of flame temperature: about 1300°C and calorific value: 2.1 kW. The treatment time was 7 seconds. The compact was placed on a position at a distance of 50 mm from a burner head, and the flame treatment was performed thereon at a rate of 3 mm/sec. FIG. 7 is an image showing the fiber exposure portion of the compact which was formed through the flame treatment.

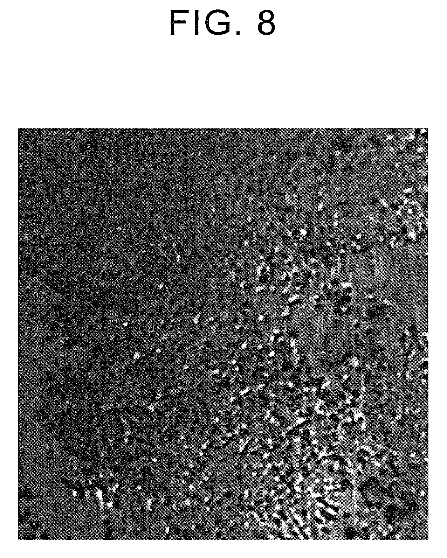

The corona discharge treatment was performed on one end of the compact including C-SMC using a corona treatment device (MULTIDYNE 1, manufactured by Navitas Co., Ltd.). Treatment conditions were set as follows.
The wettability of the position on the corona discharge treatment was performed was 48 dyne or higher.
Electrode voltage: 12 kV (x2)
Maximum treatment area: 65 mmx40 mm
Treatment distance (distance between the treatment head and the object): 5 mm
Treatment time: 1 min
FIG. 8 is an image showing the fiber exposure portion of the compact which was formed through the corona discharge treatment.

Each of the test pieces was stored in a room controlled to 25±2°C for 10 days or longer and was provided for a welding test.

### (Ultrasonic Welding)

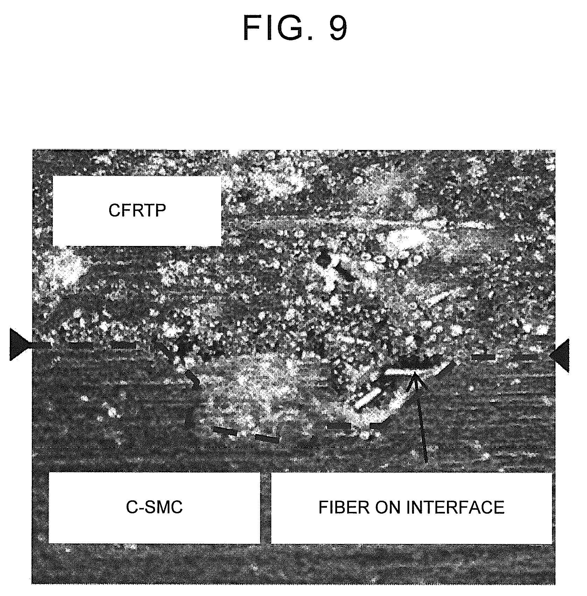

The first compact including C-SMC and the second compact including the continuous fiber material or the random material were joined to each other by ultrasonic welding at a position of the first compact on which the above-described treatments were performed. As a result, a joined body was formed. As a ultrasonic welding machine, 2000Xdt manufactured by Branson Ultrasonics Co. was used. A nominal frequency of the ultrasonic welding machine was 20 kHz, and a maximum output thereof was 300 W. A flat horn having a tip end of ϕ15 was used, the amplitude was 28 µm, the sinking amount was 0.5 mm, and the applied pressure was 650 N. FIG. 9 is an image showing a section of a joint portion formed by joining the first compact including C-SMC, on which a corona discharge treatment was performed, and the second compact including the continuous fiber material to each other by ultrasonic welding. As shown in FIG. 9, it can be seen that the fiber was present at an interface between C-SMC and the continuous fiber material. In FIG. 9, a position indicated by a dotted line represents the interface between the C-SMC and the continuous fiber material.

### (Shear Strength Measurement)

A shear test was performed on the joined body using AUTOGRAPH AG-X100KN manufactured by Shimadzu Corporation. The obtained results are shown in Table 1.

**[Table 1]**

| | Second Compact | | |
|---|---|---|---|
| Treatment Method | Continuous Fiber Material | Random Material | |
| Mold Release Agent Removal | 5.8 MPa | 0.8 MPa | Comparative Example |
| Sanding Treatment | 19.9 MPa | 8.8 MPa | Example |
| Flame Treatment | 16.4 MPa | 11.2 MPa | Example |
| Corona Discharge Treatment | 23.4 MPa | 14.1 MPa | Example |

As can be seen from Table 1, it can be seen that the shear strength of the test piece on which the fiber exposure portion was formed through the sanding treatment, the flame treatment, or the corona discharge treatment was higher than that of the test piece including no fiber exposure portion on which the mold release agent removal treatment was performed. It can be seen from the above results that a joined body having a satisfactory joining strength can be obtained by joining the compacts at the fiber exposure portion.

## Claims

1. A joined body comprising:
a first compact (1) that includes a fiber-reinforced resin (2) and a fiber exposure portion where a fiber (3) of the fiber-reinforced resin is exposed, the fiber exposure portion being formed on at least a part of a surface of the first compact (1);
a second compact that is joined to the first compact (1) through a joint portion; said joint portion being interposed between the fiber exposure portion of the first compact (1) and the second compact.

2. The joined body according to claim 1, wherein
at least one of the first compact (1) and the second compact includes a thermoplastic resin.

3. The joined body according to claim 1 or 2, wherein
a content of the fiber in the fiber-reinforced resin is 5 mass% to 50 mass%.

4. The joined body according to claim 3, wherein
the content of the fiber in the fiber-reinforced resin is 10 mass% to 50 mass%.

5. A method of manufacturing a joined body, the method comprising:
preparing a first compact (1) and a second compact, the first compact including a fiber-reinforced resin (2) and a fiber exposure portion where a fiber (3) of the fiber-reinforced resin (2) is exposed, and the fiber exposure portion being formed on at least a part of a surface of the first compact (1); and
joining the first compact (1) and the second compact to each other at the fiber exposure portion of the first compact.

6. The method according to claim 5, wherein
at least one of the first compact (1) and the second compact includes a thermoplastic resin.

7. A structure for a vehicle comprising
the joined body according to any one of claims 1 to 4.
